# EUROPEAN PATENT APPLICATION

(11) **EP 1 077 563 A2**
(43) Date of publication of application: **21.02.2001**
(21) Application number: 00306219.7
(22) Date of filing: 21.07.2000
(51) Int. Cl.: H04M 3/42, H04L 12/58

(54) **Telecommunications apparatus and method of processing telecommunicating calls**

(30) Priority: 18.08.1999 GB 9919582
(71) Applicant: TELSIS HOLDINGS LIMITED, Fareham, Hampshire PO15 5TT (GB)
(72) Inventor: Wilson, Jeffrey, Fareham, Hampshire PO16 7OH (GB); Farrier, David, Southampton SO15 7BJ (GB); Harding, Robert, Southampton, Hampshire SO30 3RU (GB)
(74) Representative: Pilch, Adam John Michael

(57) **Abstract**

A telecommunications services apparatus (24) is arranged in operative association with a telecommunications system. The telecommunications system has a plurality of communications terminals (1,2) which provide a facility for telecommunications voice calls between users of the system though which telephone conversations may be conducted from remote locations. The telecommunications services apparatus (24) comprises a data recorder (30) which operates to generate a data file which is representative of at least part of a voice call for at least one of the parties to the call, and an electronic mail processor (32) which operates to associate a caller identity number of one of the parties to the call with an electronic mail address, and communicate the data file to the electronic mail address. The electronic mail processor (32) may be provided with a data store (40) in which electronic mail addresses associated with caller identity numbers are pre-stored, and a search processor (42) which operates to retrieve the electronic mail address associated with the caller identity number of one of the parties to the call, to which the record of the voice call is sent.

## Description

The present invention relates to telecommunications services apparatus and methods of providing telecommunications services. More particularly, the present invention relates to telecommunications services apparatus which operate in association with telecommunications systems to provide a facility for recording at least part of a telephone conversation.

Telecommunications systems are known to provide a facility for remote communication between users. The users are provided with communications terminals which are connected via a telecommunications network which includes a telecommunications switch through which the communications terminals may be inter-connected. A process in which at least two of the communications terminals are connected through the telecommunications network by the telecommunications switch is known as a telephone call or simply a call. Telephone calls which are set-up to provide a facility for conducting conversations between remotely located users, by converting the sounds of the voices of the users into signals, and communicating the signals between the users via the telecommunications network are known as voice calls. A telephone call may also be made to communicate data representative of a voice call between communications terminals via the telecommunications network. Examples of communications terminals include telephone hand sets and mobile terminals as well as personal computers provided with modems which convert detected speech and data into a form in which the data may be conveyed over an analogue line to the telecommunications switch. The telecommunications network may also have means for communicating data in a digital form, such as for example an Integrated Services Digital Network (ISDN).

Answer phones and network voice mail systems are examples of telecommunications services apparatus which provide a facility for recording the voice of at least one party to a voice call so that messages may be left for retrieval. In the case of answer phones for example, the voice recorded is usually that of one party to a call and provides a facility for leaving a message for the intended recipient when that recipient is unable to answer the call. Typically, the answer phone is provided with a recording tape or memory onto which the message is recorded. Similarly for network voice mail systems messages are left when the intended recipient is unable or unwilling to answer a telephone call. Although these messages may be recorded digitally, these messages are often deleted after a certain period of time. Other items of telecommunications services apparatus are arranged to record both or all of the parties to a call. The services apparatus are connected in operative association with, for example, private branch exchanges and provide an arrangement for recording each party to all conversations conducted on several telephone lines or extensions of the private branch exchange. Such a recording arrangement is typically used by financial institutions and insurance companies to ensure security and confirmation of transactions and agreements conducted via the telephone system. These allow the institutions to retain a back up copy of such transactions in case of a dispute. Such recordings are however not generally available to the other party to the call which is usually a member of the general public. Furthermore access and retrieval of these recordings can not be readily made because high capacity storage devices which are required to be used where all telephone conversations are recorded for a plurality of telephone lines do not easily allow access to particular conversations. Other examples of telecommunications services apparatus which provide a facility for recording telephone conversations are those which are provided to record conference calls. Recording a conference call provides a means for reviewing the content of the call for further reference and analysis. An example of such a voice services equipment is disclosed in our co-pending European patent application serial number EP 0 750 513 A. However in common with the other examples of telecommunications services apparatus which operate to record telephone conversations, the recorded telephone conversations are not easily accessible to the parties to the voice calls.

According to the present invention there is provided a telecommunications services apparatus for use in operative association with a telecommunications system, the telecommunications system having a plurality of communications terminals which provide a facility for telecommunications voice calls, the telecommunications apparatus comprising a data recorder which operates to generate a data file which is representative of at least part of a voice call for at least one of the parties to the call, an electronic mail processor which operates to associate a caller identity number with an electronic mail address of one of the parties to the call, and to communicate the data file to the electronic mail address.

As will be appreciated from the above explanation of known recording apparatus, there is a requirement for a telecommunications services apparatus which provides an improved facility for creating and accessing a record of one or all of the parties to a telecommunications voice call.

The telecommunications services apparatus provides an improvement to the telecommunications system with which it is associated, in that the record of the conversation is efficiently generated and delivered to the party to the call in a form in which the party may readily access and further process the record. By providing a data recorder which generates a data file representative of the voice call, and an electronic mail processor which associates an electronic mail address with a caller identity number of at least one of the parties to the call, and communicates the data file to the electronic mail address, the party to the call is provided efficiently and quickly with a record of the call in a form which allows the content of the call to be efficiently retrieved and reviewed.

Although the electronic mail address associated with a caller line identity may be established before each individual call is made, advantageously a preferred embodiment is provided with a data store in which electronic mail addresses are pre-stored in association with the caller identity numbers of users of the telecommunications system. The electronic mail processor may further include a search processor which operates to retrieve the electronic mail address associated with the party to the call. Having pre-stored the electronic mail address in the data store, the search processor may then retrieve the electronic mail address of the party to the call by associating the caller identity number of the party with the electronic mail address. Therefore once the electronic mail address has been stored in the data store in association with the caller identity number the electronic mail address may remain associated with the party to the call for all future telephone calls conducted. This therefore provides an efficient way of communicating the record of the voice calls for all calls generated by a party having a particular caller identity number. The caller identity number may be a Calling Line Identity (CLI), a mobile subscriber identity number, a Mobile Subscriber ISDN number or any designated alpha-numeric characters which identifies a party to the call.

As will be appreciated there are a very large number of telephone numbers in existence so that for the search processor to search all of these numbers in order to find a particular caller identity number might take an impractically long time. Advantageously, therefore the search processor may retrieve the electronic mail address from the data store by analysing the digits of the caller identity number and searching a smaller table into which the electronic mail addresses are stored in accordance with a value of the digits. Furthermore in a preferred embodiment the search processor may be a hashing processor which operates to retrieve the electronic mail address from the data store using a hashing algorithm applied to the caller identity number. The hashing algorithm is an example of a search process which searches the data store in dependence upon the digits of the caller identity number. This provides an efficient and relatively fast way of finding a particular caller identity number and therefore retrieving the electronic mail address associated with this caller identity number.

To provide an efficient way of populating the data store of the electronic mail processor with electronic mail addresses associated with the caller identity numbers, the electronic mail processor may further have a service processor which is arranged to operatively exchange commands with the communications terminals through which the users can enter the electronic mail addresses in the data store associated with the caller identity numbers.

Although the communications terminals may be any form of communications terminal such as conventional fixed line telephone, in a preferred embodiment the communications terminals may be mobile subscriber terminals having a data communications channel and a data control processor. The data control processor may operate in combination with the data channel to communicate under user control with the service processor to establish the electronic mail address associated with the caller identity number of the mobile subscriber terminal. Furthermore, in a preferred embodiment the data communications channel may be the short message service of the Global System for Mobile Communications (GSM).

The electronic mail processor may have an active mode in which the data file is sent to the electronic mail address and a deactivated mode in which the data file is not sent to the electronic mail address. The electronic mail processor may operate to switch between each of said modes in dependence upon commands received from the communications terminals. By providing the electronic mail processor with an activated and a deactivated mode in which the data file is sent to the electronic mail address or not sent and switching between these modes in accordance with commands received from the communications terminals, the parties to the call are provided with an efficient way of engaging and disengaging the facility for delivering the record of the voice call from the communications terminals. The data recorder may operate to record every call, and the active mode of the electronic mail processor may arrange for a previously recorded voice call to be sent to the electronic mail address. Furthermore in the deactivated mode the record processor may also be deactivated so that the data file is not generated. Therefore in the deactivated mode the data file corresponding to the recording of the voice call is not generated and the electronic mail processor takes no further action. A further improvement is therefore provided to the telecommunications services apparatus in that the communications terminal may operate in combination with the electronic mail processor to set the electronic mail processor in either of the modes on a call by call basis. This provides an advantage in that the recording of the voice call may be activated as desired by a party to the call if that party considers it appropriate to record the call. A further improvement is provided to the telecommunications apparatus in particular where there are at least two parties to the call, in arranging for the mode of the electronic mail processor to be set during the voice call without an audible indication being generated to at least one of the parties of the call. This further improvement therefore provides an advantage in that in order not to disturb the conversation between the parties to the call, one party to the call may set the electronic mail processor in active mode whilst the other party to the call is unaware that the electronic mail processor is in active mode and therefore the voice call is being recorded.

According to a further aspect of the present invention there is provided a method of processing a telecommunications voice call provided by a telecommunications system having a plurality of communications terminals through which telecommunications voice calls between parties may be made, the method comprising the steps of generating a data file which is representative of at least part of a voice call of at least one party to the call, associating a caller identity number with an electronic mail address of one of the parties to the call and communicating the data file to the electronic mail address.

Embodiments of the present invention will now be described, by way of example only, with reference to the accompanying drawings in which:
Figure 1 is a schematic block diagram of a telecommunications services apparatus coupled to a telecommunications system,
Figure 2 is a schematic block diagram of the telecommunications services apparatus and the telecommunications system shown in figure 1 at a further stage in operation,
Figure 3 is a table providing an example of an assignment between keys of a keypad and characters used to form an electronic mail address,
Figure 4 is a table illustrating how an electronic mail address may be produced using the table shown in Figure 3,
Figure 5 is a schematic block diagram showing a connection between a telecommunications switch and a voice services equipment shown in Figures 1 and 2, and
Figure 6 is a schematic block diagram showing a further connection between the telecommunications switch and the voice services equipment shown in Figures 1 and 2.

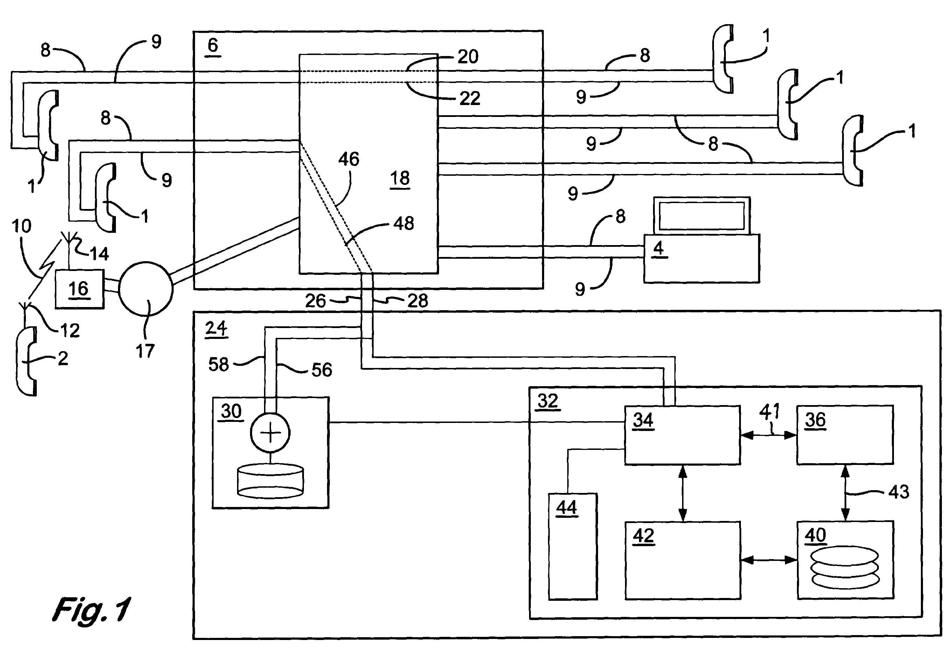

An example of a telecommunications system incorporating an item of telecommunications equipment which operates in accordance with an example embodiment of the present invention is shown in figure 1. Although the present invention finds application with any telecommunications system in which voice calls are made, the example embodiment will be presented with reference to a fixed line telecommunications system in combination with, in part, a mobile radio telecommunications system. In figure 1 examples of communications terminals 1, 2, 4 are shown to be connected to a telecommunications switch 6. The examples of communications terminals include fixed line telephones 1 a mobile radio telephone 2 and a personal computer 4. In the case of the mobile radio telephone 2, data representative of the sound of the voices of the parties to the call is communicated using radio signals 10 between a mobile station antenna 12 and an antenna 14 of a base station 16, which forms part of a mobile radio network 17. The radio signals 10 are transmitted to and from the base station antenna 14 which are processed by the base station to recover voice representative signals which are sent to and received from the switch 6 via the mobile radio network 17. The mobile radio network 17 is connected to the telecommunications switch 6 via conductors 8, 9. The outgoing and incoming cables 8, 9 are connected within the telecommunications switch 6 to a switch core 18. The telecommunications switch 6 operates to interconnect the communications terminals by controlling the switch core 18 which provides a link between one communications terminal and another. For example in figure 1 two of the communications terminals 1 are shown to be connected via the telecommunications switch 6 by the switch core 18 as indicated by the dashed lines 20, 22. The telecommunications switch operates to connect one communications terminal to another in dependence upon a call identity number associated with the communications terminals. By dialling or generating the caller identity number of the communications terminal with which communication is desired, the telecommunications switch that receives this caller identity number operates to configure the switch core 18 to connect the outgoing and incoming lines accordingly. In this way two parties to a call may communicate with each other and conduct a remote telephone conversation, where for example the communications terminals are telephones. For the example of the computer 4, the telecommunications switch 6 provides a means for communicating data via the switch 6 as for example a fax, or an electronic mail, or by accessing an Internet server.

Also coupled to the telecommunications switch 6 in figure 1 is an item of telecommunications services equipment 24. Connecting channels 26, 28 connect the services equipment 24 to the switch core 18 which therefore provides a facility for communicating with any of the communications terminals in accordance with the configuration of the switch core 18. The connecting channels 26, 28, are coupled to a data recorder 30 and an electronic mail (e-mail) processor 32. Within the e-mail processor 32, the connecting channels 26, 28 are received at a control processor 34. Coupled to the control processor 34 is a service processor 36 which is also coupled to a data store 40 via a conductor 43. Also coupled to the control processor 34, is a search processor 42 and an e-mail gateway 44. As shown in figure 1, one of the communications terminals 1 is shown to be connected to the connecting channels 26, 28 of the services equipment 24 via the switch core 18 as indicated by broken lines 46, 48.

A first stage in the operation of the services equipment 24 will now be described. The first stage in the operation of the services equipment 24 can be described generally as a process through which an electronic mail address (e-mail address) which is associated with a caller identity number is established and stored within the data store 40 of the services equipment 24. There are several ways in which the e-mail address for a particular caller identity number may be set-up and stored in the data store 40. In a first example, the association of the e-mail address is established using a telephone 1. The e-mail address is set up and stored in association with the caller identity number for this telephone, using analogue signals generated from the telephone. The telephone 1 is connected to the switch 18, via the conducting cables 8, 9, through which analogue signals may be communicated. Usually the sound of a user's voice is converted into analogue signals having a bandwidth which may pass through the cable 8, 9, to the switch 6. The telephone is also provided with a key pad from which DTMF tones, which are representative of the keys may also be communicated to the switch via the cables 8, 9. The generation of tones from the key pad which are representative of digits provided on the key pad, provides a facility for communicating data as analogue signals. In the first step of the process, the telephone 1 dials a telephone number which connects the calling party via the switch core 18 to the control processor of the electronic mail processor 32. The service processor 36 operates in combination with the control processor 34 to run through a routine in which the calling party is prompted to enter the characters of an e-mail address. The services processor 36 is provided with voice signals pre-recorded to form an interactive voice response system which serves to prompt for the calling party to enter the e-mail address using the keypad provided on the telephone 1. Thus in this case the tones generated by Dual Tone multi-Frequency (DTMF) keys pressed on a keypad of the telephone 1 allow the e-mail address to be entered and received within the control processor 34. There are several ways in which this can be done. One example of how the e-mail address can be entered using the DTMF keys will be described shortly.

The control processor 34, also receives the caller identity number from the telecommunications switch 6. The electronic mail address and the caller identity number is then passed to the services processor 36 which then stores the e-mail address within the data store 40 in the form of a hash table to be explained shortly. In a further step, the services processor 36 then prompts the calling party to determine whether recording of voice calls for this terminal should be on or off as a default state. The calling party then hangs up.

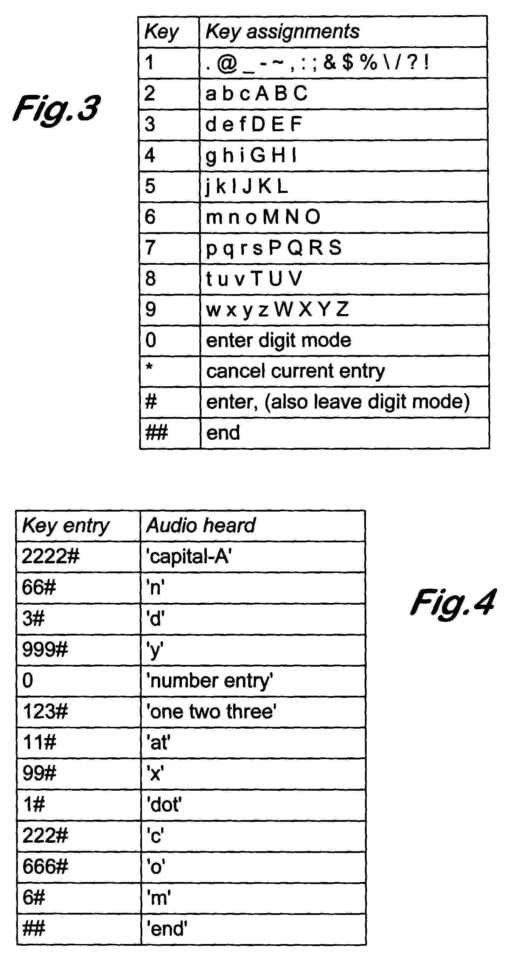

One example of how an e-mail address can be entered using the DTMF keys of a standard telephone keypad, comprising the digits 0―9, * and #, will now be described. The keypad digits 2―9 would normally be marked with ISO standard letter assignments though this is not essential. There are many ways in which text entry can be achieved using a telephone. A common method used by mobile hand sets is to cycle through a list of assignments as a key is pressed repeatedly. The current entry in the list is accepted either after a time-out or after another key is pressed. This scheme is very flexible but can require relatively long lists on each key. Many variations on this scheme exist. However these rely on immediate visual feedback from a display to indicate a select choice of letter. For operation on a standard telephone all feedback has to be done audibly. Another scheme uses a single key-press per letter for word entry, and resolves ambiguities in the word entered by language specific word frequency or predictive techniques. The user is able to cycle through a list of candidate words if the one chosen is not correct. A preferred scheme for entering the e-mail address using a conventional telephone is a variation of the first case, where repeated key-presses are used to cycle through a list of key assignments. To accommodate the problems with feedback, an enter key is used, and after the enter key is pressed, the chosen character is replayed by audio. A cancel key is also defined which deletes the current entry, and indicates via audio which character has been deleted. Two special sequences are defined, which are 28#= '@' (28 spells *at*) and 368# = '.' (368 spells *dot*). A table showing the assignment of keys to characters for the illustrative example is provided in Figure 3. Each character in each row in the second column in the table may be selected by pressing the corresponding key from the first column a number of times corresponding to the position of the character in that row. As an example, consider entering an e-mail address '**Andy123@ x.com**'. An appropriate set of keys to be pressed to enter this e-mail address is indicated in Figure 4, with the second column of the table providing an indication of what a user entering the keys would hear.

In a second example of a process through which an e-mail address may be associated with a particular caller identity number, the communications terminal is the mobile radio terminal 2 which operates to communicate via the base station 16. It will be appreciated that communications terminals having an alpha-numeric key pad and a facility for communicating data, such a GSM or a Universal Mobile Telephone System (UMTS) mobile terminal, will have a facility for communicating the e-mail address to the services processor 36, without a requirement for an inter-active voice response system. In this case the mobile station 2 operates in accordance with GSM which is provided with a facility for communicating data directly via for example with the Short Message Service (SMS) of the GSM system. The mobile terminal 2 initiates a call by dialling the caller identity number associated with the services equipment 24 so that the switch core 18 connects the cables 9 and 8 to the connecting channels 26, 28 of the services equipment 24. In this example the entry of an e-mail address is greatly facilitated by use of the SMS service. An alpha-numeric key pad forming part of the terminal 2 allows an e-mail address to be directly entered and sent via the SMS service to base station 16. The calling party then sends this e-mail address to a predetermined number such as '161' which is provided by the network operator for this purpose. The SMS message containing the e-mail is then conveyed along with the caller identity number to the control processor 34 within the services equipment 24 which feeds the e-mail address and the caller identity number to the services processor 36. The services processor 36 then operates to store the e-mail address within the hashing table in association with the caller identity number within the data store 40. The services processor 36 then operates to generate a data message in a form which can be communicated using the SMS facility of the mobile radio system and communicates this message via the connecting channel 28 through the switch core to the mobile radio network 17. The SMS is then communicated to the mobile terminal 12 to confirm that the e-mail address has been established within the services equipment 24. The calling party is then prompted to enter further keys to activate or de-activate recording on a default basis. In the default basis the service processor could activate or de-activate recording a voice call between the mobile terminal 2 and a further party to the call.

In a third example of a means via which an e-mail address may be established within the services equipment 24, the computer 4 may be connected to the services equipment 24 via the Internet. In this case, the services processor 36 may operate to generate via the control processor 34 messages which are communicated to a server for the Internet (not shown). The calling party therefore operates to enter onto a pre-defined web page an e-mail address and a call identity number with which the e-mail address is to be associated. Using this approach, personalised distribution lists are possible, where the same message can be directed to multiple recipients. For this method to be secure, some method of authorisation is required in order to ensure that the e-mail association can only be altered by the owner of the call identity number. Many methods are possible, for example the system could call the communications terminal corresponding to the call identity number and require the user to type in a PIN number specified on the web page, to verify that the user has access to this call identity number. Corresponding menu options are provided to enable the recording of calls either incoming or outgoing on a default basis. When all necessary information has been entered, the information is transmitted from the server to the services equipment 24. The services equipment provides this information to the service processor 36 via the control processor 34. The information is stored by the service processor 36 in the data store 40 in the form of the hashing table. Confirmation signals are then sent from the service processor 36 via the control processor 34 to the Internet server which generates a message which is communicated to the computer 4, which indicates that the e-mail address has been successfully established.

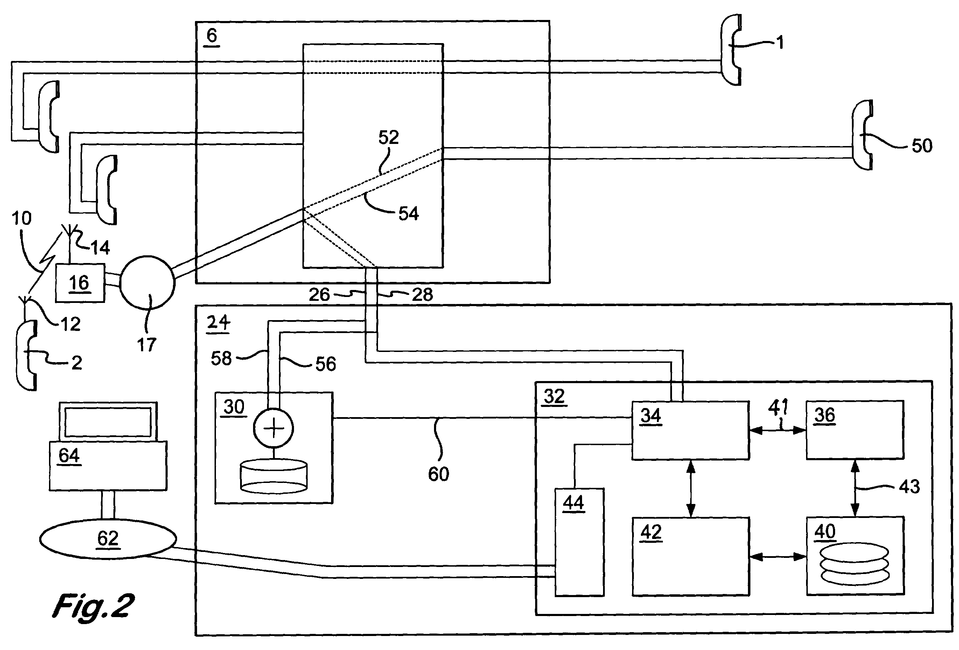

A second stage of the operation of the example embodiment of the present invention will now be described with reference to figure 2 where parts also appearing in figure 1 bear identical numerical designations. In figure 2, the telecommunications system shown in figure 1 is shown at a further stage in operation, in which the mobile terminal 2 is conducting a telephone conversation with a party to the call using a telephone 50. As is shown in figure 2 the switch core 18 of the telecommunications switch 6 is configured to connect the telephone 50 to the mobile radio network 17 as shown by the broken lines 52, 54. However, before or during the call between the telephone 50 and the mobile terminal 2, the party to the call which is operating the mobile radio terminal 2 sets the services equipment 24 in active mode for the call identity number associated with the mobile terminal 2. This is effected by dialling a predetermined prefix in this example a hash key '#' which indicates to the mobile radio network 17 that recording is required for the current or following call. Alternatively the recording of the call could be made on a default basis, and the active mode could be set after the call has terminated, which would cause the last recorded call to be delivered. The mobile radio network 17 then activates the services equipment 24 by executing a predetermined set of signalling messages which configures the switch core 18 to connect the mobile radio network 17 to the channels 26, 28 of the services apparatus 24, as well as to the telephone 50 operated by the other party to the call. Thereafter the party operating the mobile terminal 2 dials the number of the telephone 50.

During the ensuing call, the audio signals communicated between the telephone 50 and the mobile terminal 2 are also routed to the services apparatus 24. There are various ways known to those acquainted with the telecommunications field in which this can be effected. Examples of ways in which the audio signals from the telephone 50 and the mobile terminal 2 may be routed to the services apparatus 24, will be described shortly. The services apparatus 24 operates to feed the audio signals via channels 56, 58 to the data recorder 30 which then operates to record the telephone conversation. The call is also routed to the control processor 34 which extracts the caller identity number associated with the party to the call associated with the mobile terminal 2. The control processor 34 feeds the call identity number to the search processor 42, which operates to interrogate the data store 40 and, using the hash algorithm which will be described shortly, retrieves the e-mail address associated with the caller identity number. The e-mail address is fed back to the control processor. Once the call between the mobile terminal 2 and the telephone set 50 has terminated, a data file generated by the data recorded 30 and representative of the voice call is fed to the control processor 34 via the conductor 60.

In the final stage of the process performed by the telecommunications services equipment 24 according to an example embodiment of the present invention, the data file which is representative of the recorded voice call between the parties to the call is e-mailed to the e-mail address associated with the call identity number of the party to the call. The recording is fed from the control processor to the Internet gateway processor 44 which operates to attach the e-mail address to the data file. Transcoding of the data file may be required to convert between, for example a telecommunications standard signalling format G.711, for audio encoding from the telephone network and for example G.723.1 audio encoding to reduce an amount of data which must be used to represent the recorded voice call. The data file is then sent via the Internet represented by an oval element 62 to the e-mail address of the call party and is therefore received at this e-mail address which may correspond to an e-mail account of an e-mail server, which is illustrated as residing on a personal computer 64. The local copy of the data file within the services equipment 24 may then be deleted. The call party may then access the e-mail server 64 using a personal computer (not shown) to listen to, edit, store, or forward the data file to a further e-mail address as desired.

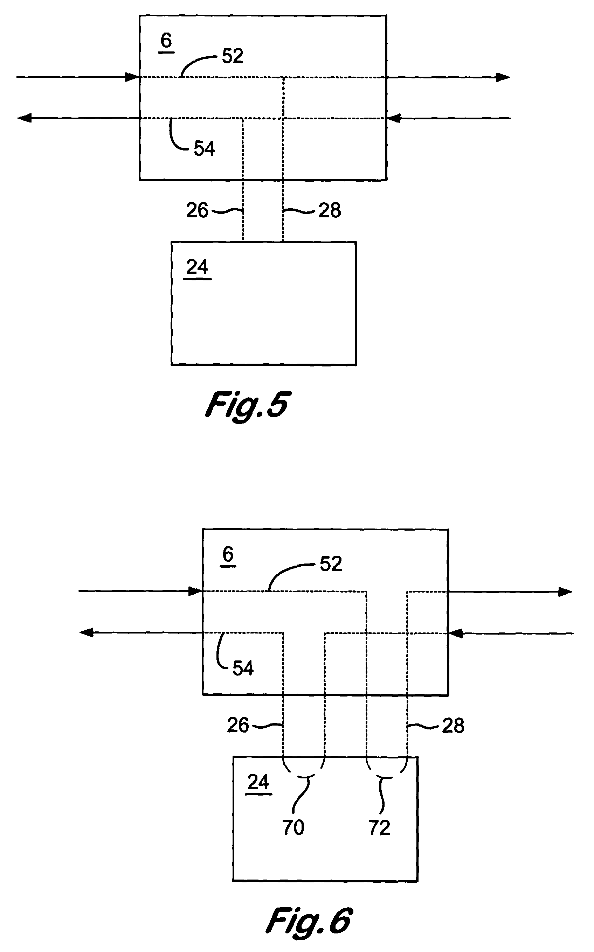

During the first stage in the operation of the services equipment 24, in which the e-mail address is associated with a caller line identity, the telecommunications switch 6 operates to route the call to a caller identity number of the services equipment 24. This is shown in Figure 1. However during the second stage in the operation of the services equipment 24, in which the voice call is recorded, both in coming and out going lines of a telephone call must be routed to the services equipment 24. There are several ways in which this can be done. Two such ways are illustrated in Figure 5 and 6. In Figure 5 the switch 6 is arranged to provide a tap from each of the connections 52, 54 across the switch 6, each of which is fed to the services equipment 24 via the connecting channels 26, 28. In Figure 6, however each side of the two connections are fed to the services equipment 24, within which the connections are completed, by loop connections 70, 72. Both sides of the voice call can then be accessed within the services equipment 24. This arrangement is known as 'tromboning'. Although in the preferred embodiment of the invention, the services equipment 24 is separate from the telecommunications switch 6, in a further embodiment of the invention, the services equipment 24, could be embodied within the switch 6, and form an integral part of the switch.

As will be appreciated although the example embodiment has been described with reference to a single e-mail address, it will be appreciated that multiple e-mail addresses could be used so that in a multi-cast arrangement the recording of the voice call could be sent to a plurality of e-mail addresses for friends and business associates etc.

As will be understood from the description of the present invention, the search processor 42 and service processor 36 operate to store the e-mail addresses in association with the caller identity numbers and to retrieve these e-mail addresses given the caller identity number. This operation may be performed in accordance with a data reduction technique such as a hash process, which effectively transforms a search key, which in the example embodiment is the call identity number into a table address. The hash process or hash coding is described in a publication entitled 'Structured Computer Organisation' second edition, by A. S. Tanenbaum, published by Prentice/Hall, in 1984 ISBN 0-13-854605-3, at page 365. The search key, which is the caller identity number, is interpreted as a character string. The set of all possible search keys can therefore be relatively large while only a small sub-set of these search keys may actually be in use. The use of search keys is then said to be sparse. It is therefore undesirable and impractical to use the search key directly as a table address for a database because the database size would then be unnecessarily large. The hash process reduces this set of search keys to a smaller bounded set of table addresses which more closely matches the number of search keys actually in use. The hash process generates a hash value from the caller identity number which is used as table addresses to access information in a database which relates to the original search key. An example of a simple hashing algorithm for a particular character string would operate to convert all the characters of the character string to corresponding ASCII values, and to multiply these ASCII values together and then to divide the result by a number equal to a desired bound on the number of table addresses. The remainder which results from this division is the output of the hash process which can be used as a hashed table address. In general, several caller identity numbers may result in the same hashed address within which the e-mail addresses are stored. For this reason multiple entries may be stored in the table at effectively the same table address. These entries are arranged as a linked list, where more than one identity number hashes to the same address. This is because multiple entries can be made at the same hash table address. Each of the entries also includes a copy of the original search string and therefore when a database lookup is performed by the search processor, it can compare each entry in the linked list with the original caller identity number in order to identify the associated e-mail address.

Various modifications may be made to the example embodiments without departing from the scope of the present invention. Thus for example the feature of electronic mail addresses should be broadly interpreted as including any form of communicating data to a predetermined address via some media or other. Furthermore the present invention finds application with any form of telecommunications system through which voice communications are effected between inter connected communications terminals.

## Claims

1. A telecommunications services apparatus for use in operative association with a telecommunications system, said telecommunications system having a plurality of communications terminals (1,2) which provide a facility for telecommunications voice calls, said telecommunications apparatus (24) comprising
- a data recorder (30) which operates to generate a data file which is representative of at least part of a voice call for at least one of the parties to the call,
- an electronic mail processor (32) which operates to associate a caller identity number with an electronic mail address of one of said parties to the call, and to communicate said data file to said electronic mail address.

2. A telecommunications services apparatus as claimed in Claim 1, wherein said electronic mail processor (32) comprises
- a data store (40) in which electronic mail addresses are pre-stored in association with caller identity numbers of users of said telecommunications system, and
- a search processor (42) which operates to retrieve said electronic mail address associated with the caller identity number of said one of said parties to the call.

3. A telecommunications services apparatus as claimed in Claim 2, wherein said search processor (42) operates to retrieve the electronic mail address from said data store (40) in dependence upon digits of said caller identity number.

4. A telecommunications services apparatus as claimed in Claim 3, wherein said search processor (42) operates to pre-store said electronic mail addresses in said data store (40) in accordance with a data reduction technique.

5. A telecommunications services apparatus as claimed in Claim 4, wherein said data reduction technique is a hashing process applied to said caller identity number.

6. A telecommunications services apparatus as claimed in any preceding Claim, wherein said electronic mail processor (32) has a service processor (36) which is arranged to operatively exchange commands with said communications terminals (1,2), through which commands said users can enter said electronic mail addresses in said data store (40) associated with said caller identity numbers.

7. A telecommunications services apparatus as claimed in Claim 6, wherein said communications terminal (2) is provided with an alpha-numeric keypad though which said commands may be generated and operatively exchanged with said service processor (36) to enter said electronic mail addresses in said data store (40).

8. A telecommunications services apparatus as claimed in Claim 7, wherein said communications terminal is a mobile subscriber terminal (2) having a data communications channel and a data control processor, said data control processor operating in combination with said data channel to communicate said commands under user control with said service processor (36) to establish the electronic mail address associated with the caller identity number of the mobile subscriber terminal (2), which is stored by said service processor (36) in said data store (40).

9. A telecommunications services apparatus as claimed in Claim 8, wherein said data communications channel is the short message service channel of the global system for mobile communications.

10. A telecommunications services apparatus as claimed in any preceding Claim, wherein said electronic mail processor (32) has an activated mode in which said data file is sent to said electronic mail address, and a de-activated mode in which said data file is not sent to said electronic mail address, which modes are set under user control.

11. A telecommunications services apparatus as claimed in Claim 10, wherein in said de-activated mode, said data recorder (30) is also de-activated whereby said data file is not generated.

12. A telecommunications services apparatus as claimed in Claim 10 or 11, wherein said communications terminal (2) operates in combination with said electronic mail processor (32) to set said electronic mail processor in either of said modes on a call-by-call basis.

13. A telecommunications services apparatus as claimed in Claim 12, wherein said mode is set after the voice call has been completed.

14. A telecommunications services apparatus as claimed in Claim 11, 12 or 13, wherein said electronic mail processor (32) is set during said voice call without an audible indication to at least one of said parties.

15. A telecommunications services apparatus as claimed in any preceding Claim, wherein said caller identity number is a Calling Line Identity (CLI), a mobile subscriber identity number, a Mobile Subscriber ISDN number or any designated alpha-numeric characters which identifies a party to said voice call.

16. A method of processing a telecommunications voice call provided by a telecommunications system having a plurality of communications terminals (1,2) through which telecommunications voice calls between parties may be made, said method comprising the steps of
- generating a data file which is representative of at least part of a voice call of at least one of the parties to the call,
- associating a caller identity number with an electronic mail address of one of said parties to the call, and
- communicating said data file to said electronic mail address.

17. A method of processing a telecommunications voice call as claimed in Claim 16, comprising the step of
- pre-storing electronic mail addresses in association with caller identity numbers of users of said telecommunication system in a data store (40); and the step of associating a caller identity number with an electronic mail address comprises the step of,
- searching said data store (40) to retrieve said electronic mail address associated with the caller identity number of said one of said parties to the call.

18. A method of processing a telecommunications voice call as claimed in Claim 17, wherein the step of searching said data store (40) comprises
- retrieving the electronic mail address from said data store (40) in dependence upon digits of said caller identity number.

19. A method of processing a telecommunications voice call as claimed in Claim 17 or 18, wherein the step of pre-storing said electronic mail addresses in said data store (40) is performed in accordance with a data reduction technique.

20. A method of processing a telecommunications voice call as claimed in Claim 19, wherein said data reduction technique is a hashing process applied to said caller identity number.

21. A method of processing a telecommunications voice call as claimed in any of Claims 16 to 20, wherein the step of communicating said data file to said electronic mail address comprises the steps of
- waiting for a user indication that the data file which is representative of the recorded voice call is required, and performing the step of communicating the data file if the recorded voice call is required.

22. A method of processing a telecommunications voice call as claimed in Claim 21, wherein said user indication is provided during said voice call without an audible indication to at least one of said parties.

23. A telecommunications apparatus having a plurality of communications terminals (1,2) which provide a facility for telecommunications voice calls, said telecommunications apparatus comprising
- a data recorder (30) which operates to generate a data file which is representative of at least part of a voice call for at least one of the parties to the call,
- an electronic mail processor (32) which operates to associate a caller identity number with an electronic mail address of one of said parties to the call, and to communicate said data file to said electronic mail address.

24. A telecommunications apparatus as claimed in Claim 23, wherein said electronic mail processor (32) comprises
- a data store (40) in which electronic mail addresses are pre-stored in association with caller identity numbers of users of said telecommunications apparatus, and
- a search processor (42) which operates to retrieve said electronic mail address associated with the caller identity number of said one of said parties to the call.
